# EUROPEAN PATENT SPECIFICATION

(11) **EP 4 318 239 B1**
(45) Date of publication and mention of the grant of the patent: **08.04.2026**
(21) Application number: 22790776.3
(22) Date of filing: 22.03.2022
(51) Int. Cl.: G06F 9/54, G06F 9/445

(54) **METHODS AND APPARATUSES FOR CALLING APPLICATION PROGRAM, STORAGE MEDIUM, AND ELECTRONIC DEVICE**
VERFAHREN UND VORRICHTUNGEN ZUM AUFRUFEN EINES ANWENDUNGSPROGRAMMS, SPEICHERMEDIUM UND ELEKTRONISCHE VORRICHTUNG
PROCÉDÉS ET APPAREILS POUR APPELER UN PROGRAMME D'APPLICATION, SUPPORT D'ENREGISTREMENT ET DISPOSITIF ÉLECTRONIQUE

(30) Priority: 22.04.2021 CN 202110438062
(43) Date of publication of application: 07.02.2024
(73) Proprietor: GUANGDONG OPPO MOBILE TELECOMMUNICATIONS CORP., LTD., Dongguan, Guangdong 523860 (CN)
(72) Inventor: LIANG, Yuping, Dongguan, Guangdong 523860 (CN); ZHANG, Bin, Dongguan, Guangdong 523860 (CN); LIU, Keyang, Dongguan, Guangdong 523860 (CN); YANG, Yang, Dongguan, Guangdong 523860 (CN)
(74) Representative: Thorniley, Peter
(86) International application number: PCT/CN2022/082132
(87) International publication number: WO 2022/222667

(56) References cited:
- WO-A1-2022/057742
- CN-A- 103 312 801
- CN-A- 110 196 668
- CN-A- 112 463 418
- CN-A- 112 463 418
- CN-A- 113 176 954
- NAGAHARA YUKI ET AL: "Distributed Intent: Android Framework for Networked Devices Operation", 2013 IEEE 16TH INTERNATIONAL CONFERENCE ON COMPUTATIONAL SCIENCE AND ENGINEERING, IEEE, 3 December 2013 (2013-12-03), pages 651 - 658, XP032573241, DOI: 10.1109/CSE.2013.101

## Description

The present application claims priorities to Chinese Patent Application No. 202110438062.0 filed on April 22, 2021 and entitled "METHOD AND APPARATUS FOR INVOKING APPLICATION PROGRAM, STORAGE MEDIUM, AND ELECTRONIC DEVICE".

### FIELD

The present disclosure relates to the field of computer technology, and more particularly, to a method and apparatus for invoking an application program, a storage medium, and an electronic device.

### BACKGROUND

With the development of technology, an electronic device often has a plurality of application programs integrated and installed therein to satisfy a user's various needs. When the user uses an application program, some information sometimes needs to be obtained or some functions sometimes need to be performed through another application program. Therefore, capabilities of various application programs on the electronic device or capabilities of various application programs on an external electronic device other than the electronic device need to be invoked to realize sharing of capabilities between different application programs. CN 112463418 A discloses a cross-device information sharing method, device, medium and electronic device. NAGAHARA YUKI ET AL: "Distributed Intent: Android Framework for Networked Devices Operation", DOI: 10.1109/CSE.2013.101, discloses a distributed framework extending Intent in Android systems to improve collaboration with embedded devices.

### SUMMARY

Embodiments of the present disclosure provide methods and electronic devices for invoking an application program from an external device.

In a first aspect, an embodiment of the present disclosure provides a method for invoking an application program applied in an electronic device using an Android operating system. The method includes: obtaining a first implicit intent generated by an application program in the electronic device; forwarding the first implicit intent to a first remote intent resolver service in the electronic device, converting the first implicit intent into a second implicit intent corresponding to an external electronic device through the first remote intent resolver service, and transmitting the second implicit intent to a second remote intent resolver service in the external electronic device through the first remote intent resolver service, such that the second remote intent resolver service in the external electronic device obtains and returns cross-terminal application program information of a response application program for responding to the second implicit intent in the external electronic device; and receiving the cross-terminal application program information returned by the external electronic device. The cross-terminal application program information is provided to the application program for invocation.

In a second aspect, an embodiment of the present disclosure provides a method for invoking an application program applied in an electronic device using an Android operating system. The method includes: receiving, through a second remote intent resolver service in the electronic device, a second implicit intent transmitted by a first remote intent resolver service in an external electronic device, the second implicit intent being obtained by the external electronic device through conversion from a first implicit intent through the first remote intent resolver service in the external electronic device, and the first implicit intent being generated by an application program in the external electronic device; obtaining, through the second remote intent resolver service in the electronic device, cross-terminal application program information of a response application program for responding to the second implicit intent in the electronic device; and transmitting, through the second remote intent resolver service in the electronic device, the cross-terminal application program information to the external electronic device, such that the external electronic device receives the cross-terminal application program information, the cross-terminal application program information being provided to the application program for invocation.

In a third aspect, an embodiment of the present disclosure further provides an electronic device using an Android operating system. The electronic device includes a processor and a memory having a computer program stored thereon. The processor is configured to, by invoking the computer program, perform the method for invoking the application program according to any one of the embodiments of the present disclosure.

### BRIEF DESCRIPTION OF THE DRAWINGS

In order to clearly explain technical solutions of embodiments of the present disclosure, drawings used in the description of the embodiments are briefly described below. Obviously, the drawings as described below are merely some embodiments of the present disclosure. Based on these drawings, other drawings can be obtained by those skilled in the art without creative effort.
FIG. 1 is a first flowchart illustrating a method for invoking an application program according to an embodiment of the present disclosure.
FIG. 2 is a second flowchart illustrating a method for invoking an application program according to an embodiment of the present disclosure.
FIG. 3 is a schematic diagram of a design scheme of a remote intent resolver connection plug-in in a method for invoking an application program according to an embodiment of the present disclosure.
FIG. 4 is a schematic diagram of a design scheme of a remote intent resolver service of a method for invoking an application program according to an embodiment of the present disclosure.
FIG. 5 is a schematic diagram of a cross-terminal design scheme of an implicit intent of a method for invoking an application program according to an embodiment of the present disclosure.
FIG. 6 is a schematic diagram of an example scenario of cross-terminal sharing of a method for invoking an application program according to an embodiment of the present disclosure.
FIG. 7 is a schematic diagram of a design scheme of a remote asset service of a method for invoking an application program according to an embodiment of the present disclosure.
FIG. 8 is another schematic diagram of an example scenario of cross-terminal sharing of a method for invoking an application program according to an embodiment of the present disclosure.
FIG. 9 is a schematic diagram of an extension solution of a method for invoking an application program according to an embodiment of the present disclosure.
FIG. 10 is a schematic diagram of a remote intent resolver service in an extension solution of a method for invoking an application program according to an embodiment of the present disclosure.
FIG. 11 is a third flowchart illustrating a method for invoking an application program according to an embodiment of the present disclosure.
FIG. 12 is a schematic structural diagram of a first apparatus for invoking an application program according to an embodiment of the present disclosure.
FIG. 13 is a schematic structural diagram of a second apparatus for invoking an application program according to an embodiment of the present disclosure.
FIG. 14 is a first schematic structural diagram of an electronic device according to an embodiment of the present disclosure.
FIG. 15 is a second schematic structural diagram of an electronic device according to an embodiment of the present disclosure.

### DETAILED DESCRIPTION

Technical solutions according to embodiments of the present disclosure will be described clearly and completely below in combination with accompanying drawings of the embodiments of the present disclosure. Obviously, the embodiments described below are only a part of the embodiments of the present disclosure, rather than all embodiments of the present disclosure. On a basis of the embodiments of the present disclosure, all other embodiments obtained by those skilled in the art without creative labor shall fall within the protection scope of the present disclosure.

References herein to "embodiments" mean that a particular feature, structure, or characteristic described in connection with the embodiments may be included in at least one embodiment of the present disclosure. The term appearing at various places of the specification does not necessarily refer to the same embodiment, nor is it a separate or alternative embodiment that is mutually exclusive with other embodiments. It should be understood, both explicitly and implicitly, by those skilled in the art that the embodiments described herein may be combined with other embodiments.

An embodiment of the present disclosure provides a method for invoking an application program. The method for invoking the application program may be executed by an apparatus for invoking an application program according to an embodiment of the present disclosure, or an electronic device integrated with the apparatus for invoking the application program. The apparatus for invoking the application program can be implemented in hardware or software. The present disclosure is based on an Android operating system. The electronic device may be a smartphone, a television, a watch, and other devices using the Android operating system.

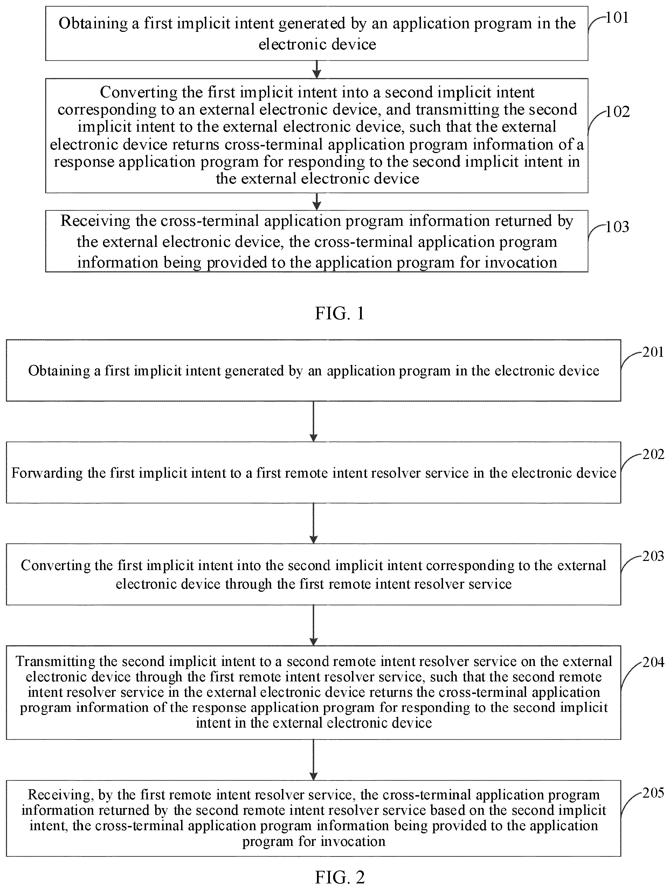

According to the embodiments of the present disclosure, provided is a method for invoking an application program applied in an electronic device. FIG. 1 is a first flowchart illustrating a method for invoking an application program according to an embodiment of the present disclosure. As illustrated in FIG. 1, a specific process of the method for invoking the application program according to the embodiment of the present disclosure may include the following operations.

At 101, a first implicit intent generated by an application program in the electronic device is obtained.

The present disclosure is based on the Android operating system. Used by the Android operating system as a carrier for information transmission between components, an intent is a request message transmitted between different components, and is a request and an intent emitted by an application program. Intents are divided into explicit intents and implicit intents. An explicit intent is an intent clearly indicating the name of a target component, and an implicit intent is an intent that does not explicitly indicate the name of the target component.

The explicit intent directly defines the target component with the name of the component, while a developer tends not to be clear about component name in other application programs. Therefore, the explicit intent is more used to deliver messages inside the application program. On the contrary, the implicit intent is more widely used to deliver messages between different application programs because the Android operating system must help the application program determine a component that best matches the implicit intent without explicit target component name.

For example, when any application program in the electronic device generates the first implicit intent, the first implicit intent is obtained.

At 102, the first implicit intent is converted into a second implicit intent corresponding to an external electronic device, and the second implicit intent is transmitted to the external electronic device, such that the external electronic device returns cross-terminal application program information of a response application program for responding to the second implicit intent in the external electronic device.

Here, in this embodiment of the present disclosure, when any application program in the electronic device generates the implicit intent, a standard application program interface may be invoked through the Android operating system of the electronic device. For example, a response application program capable of matching the implicit intent is obtained by means of an interface such as a resolve Activity interface, a resolve Service interface, a query Intent Activities interface, a query Intent Services interface, and the like. There may be one or more such response application programs, or there may be no such response application program. When one or more such response application program exist, a service corresponding to the implicit intent may be executed by these response application programs.

For example, when the electronic device transmits the first implicit intent to the external electronic device other than the electronic device, the electronic device performs serialization processing on the first implicit intent to convert the first implicit intent into the second implicit intent, and transmits the second implicit intent to the external electronic device.

Further, after receiving the second implicit intent, the external electronic device performs deserialization processing on the second implicit intent, to construct it as a third implicit intent corresponding to the external electronic device. The external electronic device invokes the standard application program interface in the external electronic device through an Android operating system in the external electronic device based on the third implicit intent, to obtain a response application program capable of matching the third implicit intent. There may be one or more such response application programs or no such response application program. When one or more such response application programs exist, cross-terminal application program information may be generated by obtaining information of these response application programs.

It should be noted that the cross-terminal application program information is obtained by performing serialization processing on the external electronic device. In some embodiments, the external electronic device performs serialization processing on information of a response application program corresponding to the third implicit intent to obtain the cross-terminal application program information. The cross-terminal application program information may include information such as an icon and a name corresponding to the response application program responding to the third implicit intent in the external electronic device.

Here, serialization is a process in which state information of an object is converted into a storable or transmissible form. During serialization, the object writes its current state to a temporary memory area or persistent memory area. Later, the object may be re-created by reading or deserializing the state of the object from the memory area, i.e., the object is restored from serialized data. That is, the serialization processing is to serialize all fields of an instance of the object, meaning that the data may be represented as serialized data for the instance. Similarly, deserialization extracts data from serialized forms of expression and sets the object state directly.

At 103, the cross-terminal application program information returned by the external electronic device is received. The cross-terminal application program information is provided to the application program for invocation.

In this embodiment of the present disclosure, the electronic device receives the cross-terminal application program information returned by the external electronic device. Since the cross-terminal application program information is converted by the external electronic device into serialized data that may be transmitted across the terminal, the electronic device needs to perform deserialization processing and data extraction on the cross-terminal application program information, to recover the data which is then provided to the application program in a local electronic device for invocation.

In a specific implementation, the present disclosure is not limited by an execution order of various steps described. Some steps may also be performed in other orders or performed simultaneously without conflicts.

According to the technical solution provided in the embodiment of the present disclosure, the first implicit intent generated by the application program in the electronic device is obtained. Then, the first implicit intent is converted into the second implicit intent corresponding to the external electronic device, and the second implicit intent is transmitted to the external electronic device, such that the external electronic device returns the cross-terminal application program information of the response application program for responding to the second implicit intent in the external electronic device. Next, the cross-terminal application program information returned by the external electronic device is received, and the cross-terminal application program information is provided to the application program for invocation. With the embodiment of the present disclosure, an implicit intent generated in the local electronic device is transmitted to the external electronic device, and the cross-terminal application program information of the response application program that responds to the implicit intent and is returned by the external electronic device is received, so that the local electronic device may invoke capabilities of various application programs on the external electronic device by means of the cross-terminal application program information, thereby improving flexibility of cross-terminal invocation of the application programs between different electronic devices.

The method described according to the above embodiments will be described in further detail below with the following examples.

According to the embodiment of the present disclosure, provided is a method for invoking an application program applied in an electronic device. FIG. 2 is a second flowchart illustrating a method for invoking an application program according to an embodiment of the present disclosure. As illustrated in FIG. 2, a specific process of the method for invoking the application program according to the embodiment of the present disclosure includes the following operations.

At 201, a first implicit intent generated by an application program in the electronic device is obtained.

For example, when any application program in the electronic device generates the first implicit intent, the first implicit intent is obtained.

At 202, the first implicit intent is forwarded to a first remote intent resolver service in the electronic device.

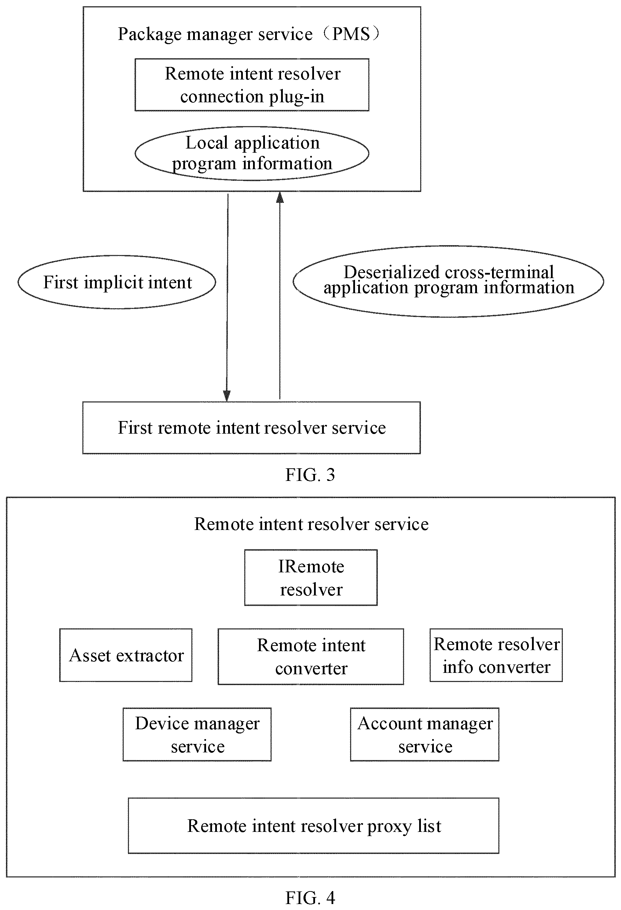

FIG. 3 is a schematic diagram of a design scheme of a remote intent resolver connection plug-in in a method for invoking an application program according to an embodiment of the present disclosure. Referring to FIG. 3, in some implementations, a special modification may be performed in the Android Framework. For example, a Remote Intent Resolver Connection plug-in is newly added in a Package Manager Service (PMS) for detecting whether the first remote intent resolver service exists in a current operating system. When the first remote intent resolver service exists in the current operating system, a connection is established. Moreover, the first implicit intent is forwarded to the first remote intent resolver service when a resolve Intent is performed in the PMS.

At 203, the first implicit intent is converted into the second implicit intent corresponding to the external electronic device through the first remote intent resolver service.

Here, referring to FIG. 4, a remote intent resolver service shown in FIG. 4 is a key module according to an embodiment of the present disclosure. The remote intent resolver service includes an IRemote Resolver, an Asset Extractor, a Remote Intent Converter, a Remote Resolver info Converter, a Device Manager Service, an Account Manager Service, and a Remote Intent Resolver Proxy List.

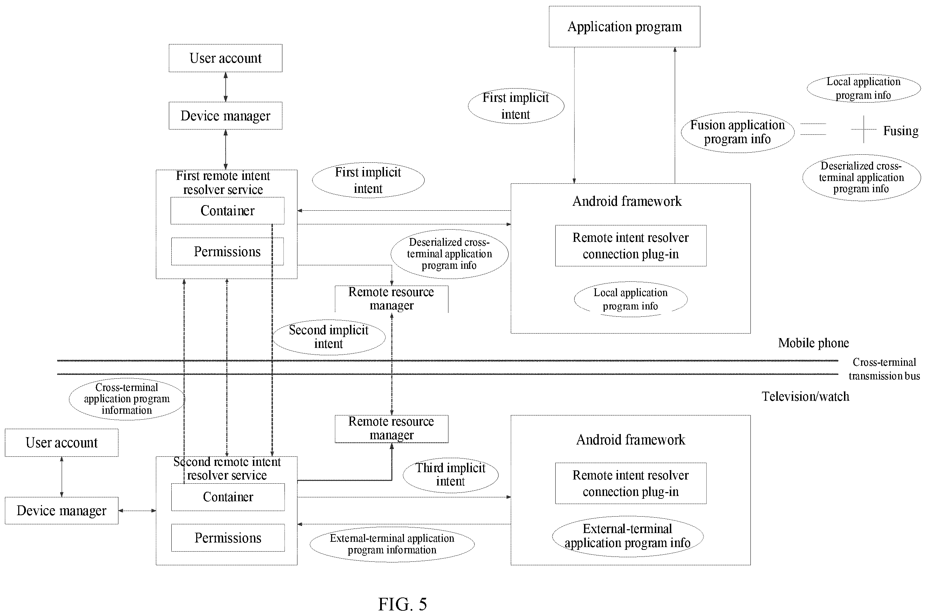

In some implementations, referring to FIG. 5, after the first remote intent resolver service receives a first implicit intent transmitted by the Android framework, permission authentication is performed. When the permission authentication is passed, relevant parameters are extracted and configured as a new serializable second implicit intent. When the permission authentication fails, an error code is returned. The first implicit intent may be serialized by a remote intent converter in the first remote intent resolver service to obtain the second implicit intent corresponding to the external electronic device.

It can be understood that only an invocation of application programs between two electronic devices is illustrated in FIG. 5. Similarly, when the electronic device invokes application programs in a plurality of external electronic devices, the same applies. In a case where the electronic device may invoke the application programs in the plurality of external electronic devices, a connection with the plurality of external electronic devices, such as a WiFi connection, a BLE connection, or the like, may be established through the device manager service in the first remote intent resolver service. Moreover, device information of the plurality of external electronic devices, such as a MAC address, a logical ID of the external electronic device, and the like, is obtained for querying and invocation by other modules.

At 204, the second implicit intent is transmitted to a second remote intent resolver service on the external electronic device through the first remote intent resolver service, such that the second remote intent resolver service returns the cross-terminal application program information of the response application program for responding to the second implicit intent in the external electronic device.

In some implementations, referring to FIG. 4 and FIG. 5, when the service is initialized, the first remote intent resolver service performs authentication and authorization, establishes a connection, and creates a cross-terminal transmission bus with the second remote intent resolver service of the external electronic device through the device manager service and the account manager service. In some embodiments, the remote intent resolver proxy list manages the obtained proxy object IRemote resolver served by the second remote intent resolver service, maps the IRemote resolver with an ID of the external electronic device, and stores the IRemote resolver with the ID of the external electronic device in a container, such as Map<Device ID, I Remote Resolver>. A MAP container is one of association containers, i.e., a device ID of the external electronic device is associated with its corresponding IRemote resolver, which facilitates the electronic device communicating with different external electronic devices.

Here, the first remote resolver service transmits the second implicit intent to an IRemote resolver in the second remote intent resolver service on the external electronic device through the IRemote resolver thereof. After the IRemote resolver in the second remote intent resolver service on the external electronic device receives the second implicit intent, permission verification is performed. When the permission verification is passed, the second implicit intent is subjected to parameter extraction, i.e., the second implicit intent is subjected to deserialization processing to restore the second implicit intent, to obtain the third implicit intent. Then, the external electronic device invokes the standard application program interface in the external electronic device through the Android operating system in the external electronic device according to the third implicit intent, and also obtains the response application program capable of matching the third implicit intent. There may be one or more such response application programs, or no such response application program. When one or more such response application programs exist, the information of the response application programs is obtained, to generate external-terminal application program information. The external electronic device also performs serialization processing on the external-terminal application program to convert it into the cross-terminal application program information likewise, so as to transmit the cross-terminal application program information obtained in the external electronic device back to the electronic device. When the permission verification is not passed, the error code is returned.

Here, the second remote intent resolver service performs serialization processing on the external-terminal application program information to convert the external-terminal application program information into the cross-terminal application program information. This may be specifically implemented by a remote intent information converter in the second remote intent resolver service.

At 205, the cross-terminal application program information returned by the second remote intent resolver service based on the second implicit intent is received by the first remote intent resolver service. The cross-terminal application program information is provided to the application program for invocation.

In some embodiments, the IRemote resolver in the first remote intent resolver service receives cross-terminal application program information returned by the IRemote resolver in the second remote intent resolver service.

In this embodiment of the present disclosure, the electronic device receives the cross-terminal application program information returned by the external electronic device. Since the cross-terminal application program information is converted by the external electronic device into the serialized data that may be transmitted across the terminal, the electronic device needs to perform deserialization processing on and perform data extraction on the cross-terminal application program information to recover the data for obtaining the deserialized cross-terminal application program information, and provides the deserialized cross-terminal application program information to the application program in the local electronic device for invocation.

It can be understood that the cross-terminal application program information after being subjected to the deserialization processing may be displayed to a user for the user to select a target application program to be provided to the application program in the local electronic device for invocation.

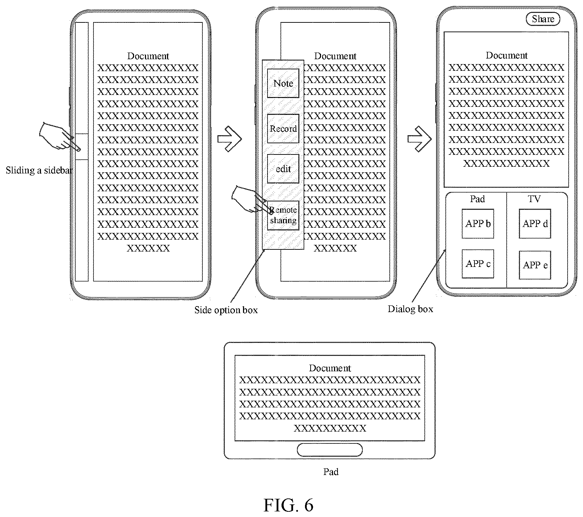

FIG. 6 is a schematic diagram of an example scenario of cross-terminal sharing of a method for invoking an application program according to an embodiment of the present disclosure.

Referring to FIG. 6, it can be understood that one or more external electronic devices may be provided. For example, the electronic device is a mobile phone, and the external electronic device includes a television and a pad. For example, when the user is browsing a document through an application program *a* on the mobile phone, the user feels bad for browsing on the mobile phone, and hopes for display of the document by means of the television or pad, to enhance a display effect of the document.

For example, sliding a sidebar may be used as a triggering operation of remote sharing. The triggering operation may be diverse. For example, the triggering operation may be a gesture operation, a click operation, and the like. The user may slide the sidebar to trigger the mobile phone to pop up a side option box corresponding to a remote sharing function.

Next, the user clicks the remote sharing function on the side option box to trigger the application program *a* to generate the first implicit intent. Then, the mobile phone obtains corresponding response application program information in the television or corresponding response application program information in the pad based on the solutions provided by the present disclosure, and further displays the obtained response application program information corresponding to the television or the pad that responds to the first implicit intent. For example, a dialog box shown in FIG. 6 may be popped up for display. It can be understood that the displayed response application program information may be provided to the application program that generates the first implicit intent on the mobile phone for invocation.

Further referring to FIG. 6, when the user clicks on a corresponding application program c in the pad, the document may be displayed on the pad through the application program c.

In some implementations, after the step of "obtaining the first implicit intent generated by the application program in the electronic device", the local application program information of the electronic device responding to the first implicit intent may also be obtained, thereby displaying both the local application program information and the cross-terminal application program information. As such, the user may select the target application program to be provided to the application program in the local electronic device for invocation.

Here, the standard application program interface in the operating system of the electronic device may be invoked, and local application program information corresponding to the first implicit intent is obtained through the standard application program interface.

It can be understood that when any application program in the electronic device generates the first implicit intent, the standard application program interface may be invoked by means of the Android operating system of the electronic device. For example, a response application program capable of matching the first implicit intent is obtained by means of interfaces like a resolve Activity interface, a resolve Service interface, a query Intent Activities interface, and a query Intent Services interface. There may be one or more such response application programs, or no such response application program. When one or more such response application programs exist, the information of the response application programs may be obtained, to generate the local application program information. For example, the local application program information may include information such as an icon and a name corresponding to the response application program.

For example, after the electronic device obtains its own local application program information and the cross-terminal application program information from the external device, the local application program information and the cross-terminal application program information may be combined to obtain fusion application program information. Moreover, the fusion application program information is displayed and provided to the application program generating the first implicit intent for invocation.

It should be noted that when the local application program information is combined with the cross-terminal application program information, the cross-terminal application program information is actually subjected to deserialization processing to obtain the deserialized cross-terminal application program information. Then, the deserialized cross-terminal application program information is fused with the local terminal application program information to obtain the fusion application program information.

In an implementation, when the fusion application program information is displayed, the fusion application program information may be displayed in the form of a list for example. In some embodiments, the obtained information like icon and name corresponding to the response application program that responds to the first implicit intent in the electronic device and the external electronic device may be displayed in the list, and the list is provided to the user for the user's selection. After the user selects one of application programs in the list (referred herein to as a target invocation application program), the application program invokes the target invocation application program to perform the service corresponding to the first implicit intent.

In an implementation, referring to FIG. 3, when the local application program information is fused with the cross-terminal application program information, the cross-terminal application program information subjected to deserialization processing may be injected into the PMS through the remote intent resolver connection plug-in in the PMS, and is combined with the local application program information of the electronic device to obtain the fusion application program information. Then, the fusion application program information is returned based on an original process of the Android framework to be provided to the application program generating the first implicit intent for invocation.

Here, resources such as icons and tags in the application program information generally need to be used in a list display. Moreover, these resources may be obtained through a Remote Asset Service.

In some implementations, when the target application program invoked by the application program is an application program in the cross-terminal application program information, the target application program on the external electronic device responds to the first implicit intent.

For example, when the target application program selected by the user is the application program on the external electronic device, the target application program on the external electronic device responds to the first implicit intent.

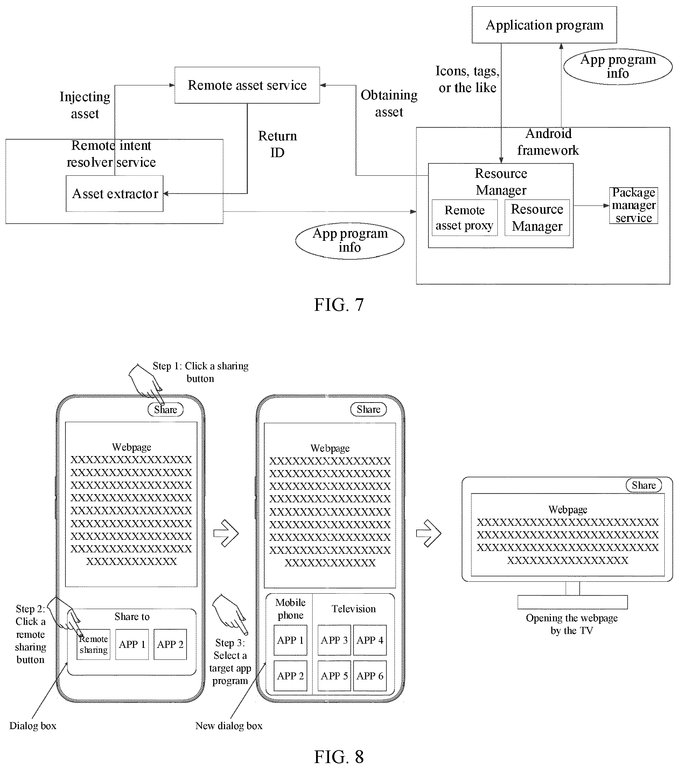

A specific framework for obtaining an external electronic device resource is illustrated in FIG. 7. Referring to FIG. 7, since a resource such as the icon or the tag in the application program information is one int value, it is necessary to associate the int value with a real drawable resource like a character string resource, which is a task completed by the remote asset service. A resource in the remote asset service is a resource extracted by the asset extractor in the remote intent resolver service. Moreover, the resource is injected into the remote asset service, and is stored and managed through the remote asset service. In addition, an ID corresponding to the resource is returned, so that a corresponding resource may be obtained subsequently according to the ID. When the application program invokes the Android framework to obtain resources, the resources may be obtained from the remote asset service through an Asset Manager and a Remote Asset Proxy in a Resource Manager of an Android framework layer.

FIG. 8 is another schematic diagram of an example scenario of cross-terminal sharing of a method for invoking an application program according to an embodiment of the present disclosure.

For example, referring to FIG. 8, the electronic device may be the mobile phone, and the external electronic device may be the television. Referring to FIG. 8, when the user browses a webpage such as a webpage for video playing on a browser of the mobile phone, if the user wants to open the webpage on an external television, it may be accomplished by the steps illustrated in FIG. 8 as follows.

Referring to a first step in FIG. 8, a user may trigger a browser application program to generate the first implicit intent by clicking a sharing button at a top of a mobile phone page, and obtain local application program information of a response application program for responding to the first implicit intent in the mobile phone: an application program 1 and an application program 2. At this time, a dialog box is popped up at a bottom of the mobile phone, and includes a remote sharing button and local application program information corresponding to the response application program responding to the first implicit intent.

Referring to a second step in FIG. 8, when the user wants to perform remote sharing, the user may continue to click the remote sharing button on the dialog box. At this time, the mobile phone establishes a communication connection with the television, and performs serialization processing on the first implicit intent to convert the first implicit intent into a second implicit intent corresponding to the television to be transmitted to the television, such that the television returns cross-terminal application program information of the response application program for responding to the second implicit intent in the television. After receiving the cross-terminal application program information, the mobile phone converts the cross-terminal application program information into the deserialized cross-terminal application program information corresponding to the mobile phone through deserialization processing: an application program 3, an application program 4, an application program 5, and an application program 6. Further, the mobile phone fuses the local application program information and the cross-terminal application program information subjected to deserialization processing to obtain fusion application program information. The mobile phone may display the fusion application program information through a new dialog box popped up at the bottom of the mobile phone, to provide the user with the fusion application program information for selecting the target application program.

With reference to a third step in FIG. 8, the user may realize invocation by a browser application program of other application programs by selecting an application program in the fusion application program information as a target application program. When the target application program selected by the user is the application program on the television, like the application program 3, a webpage displayed on a mobile phone browser may be opened on the television through the application program 3.

It can be understood that the application programs corresponding to the application program information for display all have a capability of viewing the document.

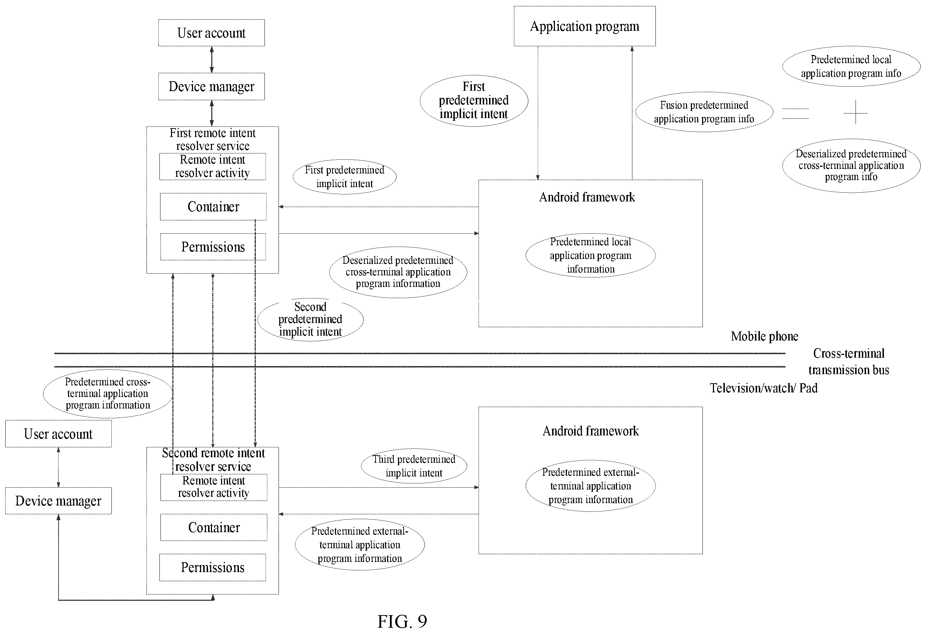

In some implementations, referring to FIG. 9, a solution shown in FIG. 9 is an extension solution based on the original framework of the present disclosure.

When the first implicit intent is a first predetermined implicit intent, the first predetermined implicit intent is converted into a second predetermined implicit intent corresponding to the external electronic device, and the second predetermined implicit intent is transmitted to the external electronic device, such that the external electronic device returns predetermined cross-terminal application program information corresponding to the second predetermined implicit intent; and the predetermined cross-terminal application program information is received. The predetermined cross-terminal application program information is provided to the application program for invocation.

It can be understood that in the extension solution, corresponding application program information is predetermined in advance for the predetermined implicit intent, i.e., when the electronic device invokes the external electronic device and converts the first predetermined implicit intent into the second predetermined implicit intent to be transmitted to the external electronic device, the corresponding predetermined cross-terminal application program information is provided in advance in the external electronic device. Therefore, the external electronic device does not need to search for the application program information corresponding to the implicit intent in real time, i.e., does not need to search for the program information corresponding to the implicit intent by invoking the standard application program interface in the operating system but directly obtains the predetermined application program information corresponding to the predetermined implicit intent that has been declared in advance.

Similarly, the first predetermined implicit intent may further be correspondingly provided with predetermined local application program information in the extension solution. In this way, the electronic device may provide both the predetermined local application program information and the predetermined cross-terminal application program information to the user for selection.

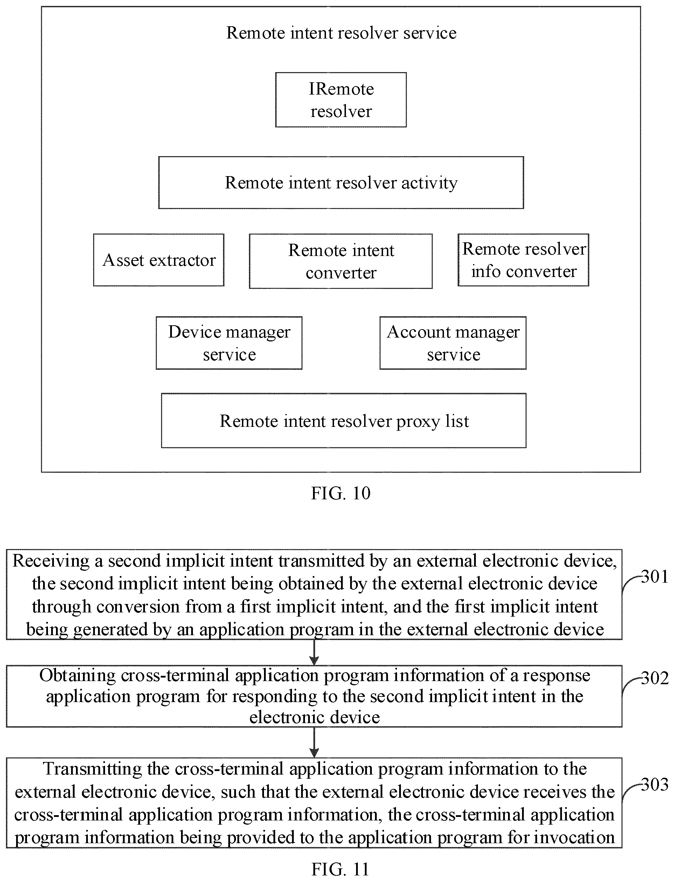

On the basis of FIG. 4, referring to FIG. 10, some modifications are made to the design of the remote intent resolver service, i.e., a Remote Intent Resolver Activity is predetermined in an original remote intent resolver service. The remote intent resolver activity declares owning of a plurality of processing capabilities to the Android framework, i.e., declares that the predetermined implicit intent correspondingly has the predetermined application program information. In this way, the Android framework automatically detects processing capabilities declared in the remote intent resolver activity, and returns these processing capabilities to the invoking application program. It should be noted that the processing capabilities herein include not only a local processing capability of the electronic device, but also a processing capability of the external electronic (i.e., a remote processing capability). A difference between the extension solution and the solution shown in FIG. 1 is that only intent information corresponding to top-level activity information needs to be queried from a USM/AMS of the Android framework, and the intent is no longer queried through the PMS.

According to the technical solutions provided in the embodiments of the present disclosure, the first implicit intent generated by the application program in the electronic device is obtained. Then, the first implicit intent is converted into the second implicit intent corresponding to the external electronic device, and the second implicit intent is transmitted to the external electronic device, enabling the external electronic device to return the cross-terminal application program information of the response application program for responding to the second implicit intent in the external electronic device. Next, the cross-terminal application program information returned by the external electronic device is received, and is provided to the application program for invocation. With the embodiments of the present disclosure, the implicit intent generated in the local electronic device is transmitted to the external electronic device, and the cross-terminal application program information of the response application program that responds to the implicit intent and is returned by the external electronic device is received, so that the local electronic device may invoke the capabilities of various application programs on the external electronic device by means of the cross-terminal application program information, thereby improving the flexibility of cross-terminal invocation of the application programs between different electronic devices.

According to the embodiments of the present disclosure, provided is a method for invoking an application program applied in an electronic device. FIG. 11 is a third flowchart illustrating a method for invoking an application program according to an embodiment of the present disclosure. As illustrated in FIG. 11, a specific process of the method for invoking the application program according to the embodiment of the present disclosure may include the following operations.

At 301, a second implicit intent transmitted by an external electronic device is received. The second implicit intent is obtained by the external electronic device through conversion from a first implicit intent, and the first implicit intent is generated by an application program in the external electronic device.

It can be understood that the current embodiment mainly describes the electronic device receiving the second implicit intent, and corresponding processing steps it performs.

In some implementations, the second implicit intent is received by the second remote intent resolver service. In some embodiments, the second implicit intent is received by the IRemote resolver in the second remote intent resolver service. The specific content regarding generating the first implicit intent and converting the first implicit intent into the second implicit intent is described in detail in the above embodiments, and details are not described herein again.

At 302, cross-terminal application program information of a response application program for responding to the second implicit intent in the electronic device is obtained.

Here, the second implicit intent is a serializable object. Therefore, deserialization processing needs to be performed on the serializable object to obtain the third implicit intent. Then, the electronic device invokes the standard application program interface in the external electronic device through the Android operating system in the external electronic device based on the third implicit intent, and also obtains the response application program capable of matching the third implicit intent. There may be one or more such response application programs, or no such response application program. When one or more such response application programs exist, the information of the response application programs is obtained, to generate the external-terminal application program information. The external electronic device also performs serialization processing on the external-terminal application program to convert the external-terminal application program into the cross-terminal application program information likewise, so as to transmit the cross-terminal application program information obtained in the external electronic device back to the external electronic device. When the permission verification is not passed, the error code is returned.

**In** some implementations, the second implicit intent is converted to the third implicit intent by the remote intent converter in the second remote intent resolver service.

**In** some implementations, the external-terminal application program information is converted into the cross-terminal application program information by the remote intent information converter in the second remote intent resolver service.

At 303, the cross-terminal application program information is transmitted to the external electronic device, such that the external electronic device receives the cross-terminal application program information. The cross-terminal application program information is provided to the application program that generates the first implicit intent in the external electronic device for invocation.

In some implementations, receiving is performed by the second remote intent resolver service. In some embodiments, the IRemote resolver in the second remote intent resolver service transmits the cross-terminal application program information to the first remote intent resolver service in the external electronic device, specifically to the IRemote resolver in the first remote intent resolver service.

The subsequent processing steps after the external electronic device receives the second application program are described in detail in the above embodiments, and details are omitted herein.

As above, provided is the method for invoking the application according to the embodiments of the present disclosure, including: receiving a second implicit intent transmitted by an external electronic device, the second implicit intent being obtained by the external electronic device through conversion from a first implicit intent, and the first implicit intent being generated by an application program in the external electronic device; obtaining cross-terminal application program information of a response application program for responding to the second implicit intent in the electronic device; and transmitting the cross-terminal application program information to the external electronic device, such that the external electronic device receives the cross-terminal application program information, the cross-terminal application program information being provided to the application program for invocation. In this solution, after an implicit intent transmitted by the external electronic device is received by the electronic device, the electronic device obtains the response application program information through the implicit intent, generates the corresponding application program information, and returns the application program information to the external electronic device. In this way, the external electronic device may receive the returned application program information, and provide the returned application program information to the application program generating the implicit intent in the external device for invocation, thereby improving the flexibility of cross-terminal invocation of the application programs between different electronic devices.

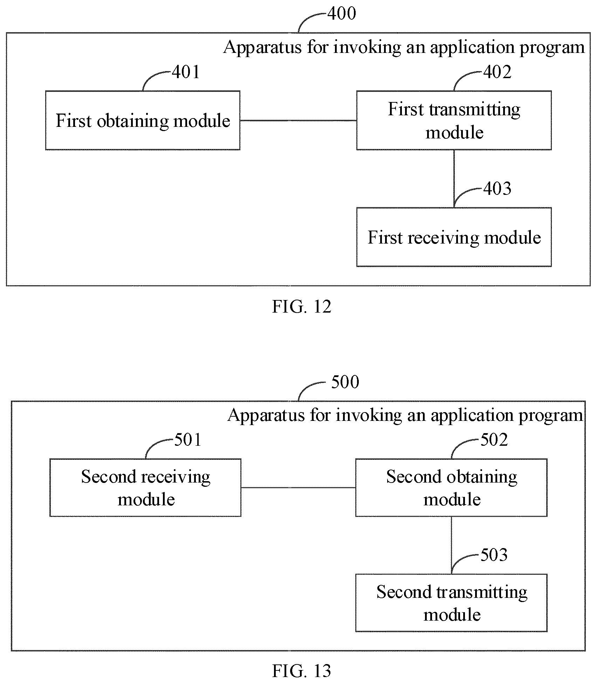

In an embodiment, further provided is an apparatus for invoking an application program. FIG. 12 is a schematic structural diagram of an apparatus for invoking an application program 400 according to an embodiment of the present disclosure. As illustrated in FIG. 12, the apparatus for invoking the application program 400 is applied in an electronic device. The apparatus for invoking the application program 400 includes a first obtaining module 401, a first transmitting module 402, a first receiving module 403, and a display module 404 as described below.

The first obtaining module 401 is configured to obtain a first implicit intent generated by an application program in the electronic device.

The first transmitting module 402 is configured to convert the first implicit intent into a second implicit intent corresponding to an external electronic device, and transmit the second implicit intent to the external electronic device, such that the external electronic device returns cross-terminal application program information of a response application program for responding to the second implicit intent in the external electronic device.

The first receiving module 403 is configured to receive the cross-terminal application program information returned by the external electronic device. The cross-terminal application program information is provided to the application program for invocation.

In some implementations, the first obtaining module 401 is further configured to: invoke a standard application program interface in an operating system of the electronic device; and obtain the local application program information corresponding to the first implicit intent through the standard application program interface.

In some implementations, the first transmitting module 402 is further configured to: perform serialization processing on the first implicit intent to convert the first implicit intent into the second implicit intent corresponding to the external electronic device.

In some implementations, the first transmitting module 402 is further configured to, when the first implicit intent is a first predetermined implicit intent, convert the first predetermined implicit intent into a second predetermined implicit intent corresponding to the external electronic device, and transmit the second predetermined implicit intent to the external electronic device, such that the external electronic device returns predetermined cross-terminal application program information corresponding to the second predetermined implicit intent.

In some implementations, the first transmitting module 402 is further configured to: forward the first implicit intent to a first remote intent resolver service in the electronic device; convert the first implicit intent into the second implicit intent corresponding to the external electronic device through the first remote intent resolver service; and transmit the second implicit intent to a second remote intent resolver service on the external electronic device through the first remote intent resolver service, such that the second remote intent resolver service in the external electronic device obtains the cross-terminal application program information of the response application program for responding to the second implicit intent in the external electronic device, and returns the cross-terminal application program information.

In some implementations, the first transmitting module 402 is further configured to convert the first predetermined implicit intent into a second predetermined implicit intent corresponding to an external electronic device, and transmit the second predetermined implicit intent to the external electronic device, such that the external electronic device returns cross-terminal application program information responding to the second predetermined implicit intent.

In some implementations, the first receiving module 403 is further configured to receive the predetermined cross-terminal application program information. The predetermined cross-terminal application program information is provided to the application program for invocation.

In some implementations, the apparatus for invoking the application program 400 may further include a response module. The response module may be configured to cause, when a target application program invoked by the application program is an application program in the cross-terminal application program information, the target application program on the external electronic device to respond to the first implicit intent.

It should be noted that, the apparatus for invoking the application program provided by the embodiments of the present disclosure is of the same concept as the method for invoking the application program according to any of the above embodiments. The apparatus for invoking the application program can implement any of methods according to the method embodiments for invoking the application program, a specific implementation of which can refer to the method embodiments for invoking the application program and will be omitted herein.

As can be seen above, the apparatus for invoking the application program 400 provided by the embodiments of the present disclosure is applied in the electronic device. According to the apparatus, the implicit intent generated in the local electronic device may be transmitted to the external electronic device, and the cross-terminal application program information of the response application program that is returned by the external electronic device and responds to the implicit intent is received, such that the local electronic device invokes the capabilities of various application programs on the external electronic device through the cross-terminal application program information, thereby improving the flexibility of the cross-terminal invocation of the application program between different electronic devices.

In an embodiment, further provided is another apparatus for invoking an application program. FIG. 13 is a schematic structural diagram of an apparatus for invoking an application program 500 according to an embodiment of the present disclosure. As illustrated in FIG. 13, the apparatus for invoking the application program 500 is applied in an electronic device. The apparatus for invoking the application program 500 includes a second receiving module 501, a second obtaining module 502, and a second transmitting module 503 as described below.

The second receiving module 501 is configured to receive a second implicit intent transmitted by an external electronic device. The second implicit intent is obtained by the external electronic device through conversion from a first implicit intent, and the first implicit intent is generated by an application program in the external electronic device.

The second obtaining module 502 is configured to obtain cross-terminal application program information of a response application program for responding to the second implicit intent in the electronic device.

The second transmitting module 503 is configured to transmit the cross-terminal application program information to the external electronic device, such that the external electronic device receives the cross-terminal application program information. The cross-terminal application program information is provided to the application program for invocation.

In some implementations, the second obtaining module 502 is further configured to: convert the second implicit intent into a third implicit intent corresponding to the electronic device through deserialization processing; invoke a standard application program interface in an operating system of the electronic device; and obtain cross-terminal application program information corresponding to the third implicit intent through the standard application program interface.

As can be seen above, the apparatus for invoking the application program 500 according to the embodiment of the present disclosure is applied in the electronic device. According to the apparatus, after an implicit intention transmitted by the external electronic device is received, the response application program information may be obtained by means of the implicit intent to generate the corresponding application program information and return the application program information to the external electronic device, enabling the external electronic device to receive the returned application program information and provide the returned application program information to the application program generating the implicit intent in the external device for invocation, thereby improving the flexibility of the cross-terminal invocation of the application program between different electronic devices.

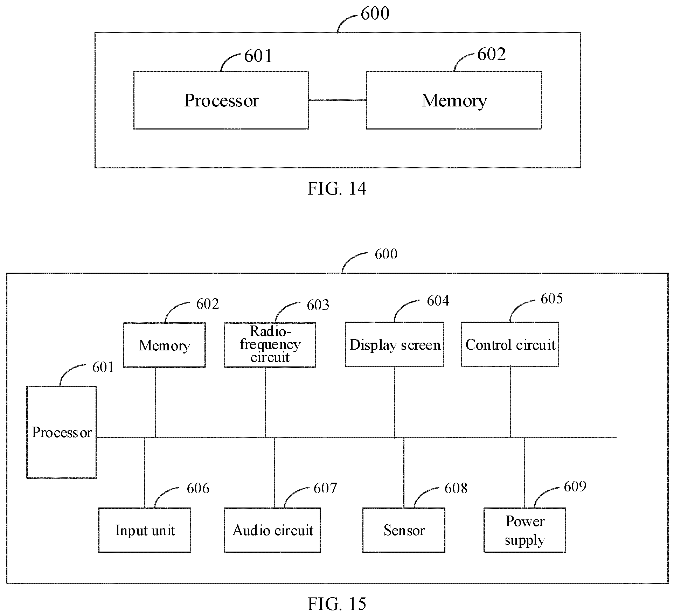

According to the embodiments of the present disclosure, further provided is an electronic device. The electronic device may be a smartphone, a tablet computer, and other devices. FIG. 14 is a first schematic structural diagram of an electronic device according to an embodiment of the present disclosure. Referring to FIG. 14, the electronic device 600 includes a processor 601 and a memory 602. The processor 601 is electrically connected to the memory 602.

The processor 601, as a control center of the electronic device 600, connects various parts of the entire electronic device by using various interfaces and lines, and performs various functions of the electronic device and processes data by running or invoking a computer program stored in the memory 602, and invoking data stored in the memory 602, thereby monitoring the electronic device as a whole.

The memory 602 may be configured to store the computer program and data. The computer program stored in the memory 602 contains executable codes in the processor. The computer program may form various functional modules. The processor 401 performs various functional applications and data processing through invoking the computer program stored in the memory 602.

In the embodiments, the processor 601 in the electronic device 600 loads instructions corresponding to processes of one or more computer programs into the memory 602 in accordance with the following step, and the processor 401 executes the computer program stored in the memory 602 to: obtain a first implicit intent generated by an application program in the electronic device; convert the first implicit intent into a second implicit intent corresponding to an external electronic device, and transmitting the second implicit intent to the external electronic device, such that the external electronic device returns cross-terminal application program information of a response application program for responding to the second implicit intent in the external electronic device; and receive the cross-terminal application program information returned by the external electronic device. The cross-terminal application program information is provided to the application program for invocation.

In some embodiments, FIG. 15 is a second schematic structural diagram of an electronic device according to an embodiment of the present disclosure. Referring to FIG. 15, the electronic device 600 further includes a radio-frequency circuit 603, a display screen 604, a control circuit 605, an input unit 606, an audio circuit 607, a sensor 608, and a power supply 609. The processor 601 is electrically connected to the radio-frequency circuit 603, the display screen 604, the control circuit 605, the input unit 606, the audio circuit 607, the sensor 608, and the power supply 609, respectively.

The radio-frequency circuit 603 is configured to transceive a radio-frequency signal to communicate with a network device or another electronic device through wireless communication.

The display screen 604 may be configured to display information inputted by the user or information provided to the user and various graphical user interfaces of the electronic device. These graphical user interfaces may be composed of an image, a text, an icon, a video, and any combination thereof.

The control circuit 605 is electrically connected to the display screen 604 and configured to control the display screen 604 to display information.

The input unit 606 may be configured to receive inputted figures, character information, or user feature information (e.g., a fingerprint), and generate a keyboard, a mouse, an operating lever, and an optical or trackball signal input that are related to user settings and function control. The input unit 606 may include a fingerprint recognition module.

The audio circuit 607 may provide an audio interface between the user and the electronic device through a speaker and a microphone. The audio circuit 607 includes the microphone. The microphone is electrically connected to the processor 601. The microphone is configured to receive voice information inputted by the user.

The sensor 608 is configured to collect external environment information. The sensor 608 may include one or more of sensors such as an ambient brightness sensor, an acceleration sensor, and a gyroscope.

The power supply 609 is configured to supply power to various components of the electronic device 600. In some embodiments, the power supply 609 may be logically connected to the processor 601 through a power management system, thereby achieving functions such as charging management, discharging management, and power consumption management through the power management system.

Although not illustrated in the drawings, the electronic device 600 may further include a camera, a Bluetooth module, and the like, and details are omitted herein.

In the embodiment according to the invention the processor 601 in the electronic device 600 loads instructions corresponding to processes of one or more computer programs into the memory 602 in accordance with the following step, and executes the computer program stored in the memory 602 to perform: obtaining a first implicit intent generated by an application program in the electronic device; converting the first implicit intent into a second implicit intent corresponding to an external electronic device, and transmitting the second implicit intent to the external electronic device, such that the external electronic device returns cross-terminal application program information of a response application program for responding to the second implicit intent in the external electronic device; and receiving the cross-terminal application program information returned by the external electronic device. The cross-terminal application program information is provided to the application program for invocation.

In some implementations, the processor 601 can perform: invoking a standard application program interface in an operating system of the electronic device; and obtaining the local application program information corresponding to the first implicit intent through the standard application program interface.

In some implementations, the processor 601 can perform: performing serialization processing on the first implicit intent to convert the first implicit intent into the second implicit intent corresponding to the external electronic device.

In some implementations, the processor 601 can perform: forwarding the first implicit intent to a first remote intent resolver service in the electronic device; converting the first implicit intent into the second implicit intent corresponding to the external electronic device through the first remote intent resolver service.

According to the invention the processor 601 performs: forwarding the first implicit intent to a first remote intent resolver service in the electronic device; converting the first implicit intent into the second implicit intent corresponding to the external electronic device through the first remote intent resolver service; and transmitting the second implicit intent to a second remote intent resolver service on the external electronic device through the first remote intent resolver service, such that the second remote intent resolver service in the external electronic device obtains the cross-terminal application program information of the response application program for responding to the second implicit intent in the external electronic device, and returns the cross-terminal application program information.

In some implementations, the processor 601 can perform: causing, when a target application program invoked by the application program is an application program in the cross-terminal application program information, the target application program on the external electronic device to respond to the first implicit intent.

In some implementations, the processor 601 can perform: when the first implicit intent is a first predetermined implicit intent, converting the first predetermined implicit intent into a second predetermined implicit intent corresponding to the external electronic device, and transmitting the second predetermined implicit intent to the external electronic device, such that the external electronic device returns predetermined cross-terminal application program information corresponding to the second predetermined implicit intent; and receiving the predetermined cross-terminal application program information. The predetermined cross-terminal application program information is provided to the application program for invocation.

In some implementations, the processor 601 can perform: receiving a second implicit intent transmitted by an external electronic device. The second implicit intent is obtained by the external electronic device through conversion from a first implicit intent, and the first implicit intent is generated by an application program in the external electronic device.

In some implementations, the processor 601 can perform: obtaining cross-terminal application program information of a response application program for responding to the second implicit intent in the electronic device.

In some implementations, the processor 601 can perform: transmitting the cross-terminal application program information to the external electronic device, such that the external electronic device receives the cross-terminal application program information. The cross-terminal application program information is provided to the application program for invocation.

In some implementations, the processor 601 can perform: receiving the second implicit intent through the second remote intent resolver service of the electronic device.

In some implementations, the processor 601 can perform: converting the second implicit intent into a third implicit intent corresponding to the electronic device through deserialization processing; invoking a standard application program interface in an operating system of the electronic device; and obtaining cross-terminal application program information corresponding to the third implicit intent through the standard application program interface.

In some implementations, the processor 601 can perform: transmitting the cross-terminal application program information to the first remote intent resolver service of the external electronic through the second remote intent resolver service of the external electronic device.

The embodiments of the present disclosure further provide a storage medium, having a computer program stored thereon. The computer program, when executed by a computer, causes the computer to perform the method for invoking the application program according to any one of the above embodiments.

It should be noted that, those skilled in the art can understand that all or part of the steps in the various methods according to the above embodiments can be completed by controlling relevant hardware through a computer program. The computer program may be stored in a computer-readable storage medium. The storage medium may include, but is not limited to, a Read Only Memory (ROM), a Random Access Memory (RAM), a disk, an optical disk, etc.

In addition, terms "first", "second" and "third" in the present disclosure are used to distinguish different objects, rather than to describe a specific sequence. In addition, terms "including", "comprising" and "having" and any variations thereof indicate non-exclusive inclusions. For example, a process, a method, a system, a product, or a device that includes a series of actions or modules is not necessarily limited to those clearly listed actions or modules. However, some embodiments may further include other actions or modules that are not clearly listed or may further include other actions or modules that are inherent to the process, the method, the product, or the device.

The method and apparatus for invoking the application program, the storage medium, and the electronic device according to the embodiments of the present disclosure are described in detail above. Specific embodiments are used in the present disclosure to illustrate the principles and implementations of the present disclosure. The description of the above embodiments is only intended to facilitate understanding of the method and its core concepts. Meanwhile, those skilled in the art can make modifications to specific implementations based on the concepts of the present disclosure. In summary, the scope of the invention is defined by the claims.

## Claims

1. A method for invoking an application program, applied in an electronic device using an Android operating system, the method comprising:
obtaining (101, 201) a first implicit intent generated by an application program in the electronic device;
forwarding (202) the first implicit intent to a first remote intent resolver service in the electronic device, converting (102, 203) the first implicit intent into a second implicit intent corresponding to an external electronic device through the first remote intent resolver service, and transmitting (102, 204) the second implicit intent to a second remote intent resolver service in the external electronic device through the first remote intent resolver service, such that the second remote intent resolver service in the external electronic device obtains and returns cross-terminal application program information of a response application program for responding to the second implicit intent in the external electronic device; and
receiving (103, 205) the cross-terminal application program information returned by the external electronic device, the cross-terminal application program information being provided to the application program for invocation,
wherein optionally, the method further comprises:
displaying the cross-terminal application program information.

2. The method for invoking the application program according to claim 1, further comprising, subsequent to obtaining (101) the first implicit intent generated by the application program in the electronic device:
obtaining local application program information of the electronic device for responding to the first implicit intent,
wherein the method further comprises, subsequent to receiving the cross-terminal application program information returned by the external electronic device:
displaying the local application program information and the cross-terminal application program information.

3. The method for invoking the application program according to claim 2, wherein said obtaining the local application program information of the electronic device for responding to the first implicit intent comprises:
invoking a standard application program interface in an operating system of the electronic device; and
obtaining the local application program information corresponding to the first implicit intent through the standard application program interface.

4. The method for invoking the application program according to claim 1, wherein said converting (102) the first implicit intent into the second implicit intent corresponding to the external electronic device comprises:
performing serialization processing on the first implicit intent to convert the first implicit intent into the second implicit intent corresponding to the external electronic device.

5. The method for invoking the application program according to claim 1, wherein said receiving (103) the cross-terminal application program information returned by the external electronic device comprises:
receiving (205), by the first remote intent resolver service, the cross-terminal application program information returned by the second remote intent resolver service based on the second implicit intent.

6. The method for invoking the application program according to claim 1, further comprising, subsequent to receiving (103) the cross-terminal application program information returned by the external electronic device, the cross-terminal application program information being provided to the application program for invocation:
causing, when a target application program invoked by the application program is an application program in the cross-terminal application program information, the target application program on the external electronic device to respond to the first implicit intent.

7. The method for invoking the application program according to claim 1, further comprising:
converting, when the first implicit intent is a first predetermined implicit intent, the first predetermined implicit intent into a second predetermined implicit intent corresponding to the external electronic device, and transmitting the second predetermined implicit intent to the external electronic device, such that the external electronic device returns predetermined cross-terminal application program information corresponding to the second predetermined implicit intent; and
receiving the predetermined cross-terminal application program information, the predetermined cross-terminal application program information being provided to the application program for invocation.

8. A method for invoking an application program, applied in an electronic device using an Android operating system, the method comprising:
receiving (301), through a second remote intent resolver service in the electronic device, a second implicit intent transmitted by a first remote intent resolver service in an external electronic device, the second implicit intent being obtained by the external electronic device by converting a first implicit intent through the first remote intent resolver service in the external electronic device, and the first implicit intent being generated by an application program in the external electronic device;
obtaining (302), through the second remote intent resolver service in the electronic device, cross-terminal application program information of a response application program for responding to the second implicit intent in the electronic device; and
transmitting (303), through the second remote intent resolver service in the electronic device, the cross-terminal application program information to the external electronic device, such that the external electronic device receives the cross-terminal application program information, the cross-terminal application program information being provided to the application program for invocation.

9. The method for invoking the application program according to claim 8, wherein said obtaining (302) the cross-terminal application program information of the response application program for responding to the second implicit intent in the electronic device comprises:
converting the second implicit intent into a third implicit intent corresponding to the electronic device through deserialization processing;
invoking a standard application program interface in an operating system of the electronic device; and
obtaining cross-terminal application program information corresponding to the third implicit intent through the standard application program interface.

10. An electronic device (600) using an Android operating system, comprising a processor (601) and a memory (602) having a computer program stored thereon, wherein the processor (601) is configured to, by invoking the computer program:
obtain a first implicit intent generated by an application program in the electronic device;
forward the first implicit intent to a first remote intent resolver service in the electronic device, convert the first implicit intent into a second implicit intent corresponding to an external electronic device through the first remote intent resolver service, and transmit the second implicit intent to a second remote intent resolver service in the external electronic device through the first remote intent resolver service, such that the second remote intent resolver service in the external electronic device obtains and returns cross-terminal application program information of a response application program for responding to the second implicit intent in the external electronic device; and
receive the cross-terminal application program information returned by the external electronic device, the cross-terminal application program information being provided to the application program for invocation,
wherein optionally, the processor (601) is further configured to:
display the cross-terminal application program information.

11. The electronic device (600) according to claim 10, wherein the processor (601) is further configured to:
obtain local application program information of the electronic device for responding to the first implicit intent; and
display the local application program information and the cross-terminal application program information.

12. The electronic device (600) according to claim 11, wherein the processor (601) is further configured to:
invoke a standard application program interface in an operating system of the electronic device; and
obtain the local application program information corresponding to the first implicit intent through the standard application program interface.

13. The electronic device (600) according to claim 10, wherein the processor (601) is further configured to:
perform serialization processing on the first implicit intent to convert the first implicit intent into the second implicit intent corresponding to the external electronic device.

14. An electronic device (600) using an Android operating system, comprising a processor (601) and a memory (602) having a computer program stored thereon, wherein the processor (601) is configured to, by invoking the computer program:
receive, through a second remote intent resolver service in the electronic device, a second implicit intent transmitted by a first remote intent resolver service in an external electronic device, the second implicit intent being obtained by the external electronic device by converting a first implicit intent through the first remote intent resolver service in the external electronic device, and the first implicit intent being generated by an application program in the external electronic device;
obtain, through the second remote intent resolver service in the electronic device, cross-terminal application program information of a response application program for responding to the second implicit intent in the electronic device; and
transmit, through the second remote intent resolver service in the electronic device, the cross-terminal application program information to the external electronic device, such that the external electronic device receives the cross-terminal application program information, the cross-terminal application program information being provided to the application program for invocation.

## Patentansprüche

1. Verfahren zum Aufrufen eines Anwendungsprogramms, angewandt in einer elektronischen Vorrichtung, die ein Android-Betriebssystem verwendet, wobei das Verfahren Folgendes umfasst:
Erhalten (101, 201) einer ersten impliziten Intention, erzeugt durch ein Anwendungsprogramm, in der elektronischen Vorrichtung;
Weiterleiten (202) der ersten impliziten Intention an einen ersten Fern-Intentionsauflöserdienst in der elektronischen Vorrichtung, Umwandeln (102, 203) der ersten impliziten Intention in eine zweite implizite Intention, korrespondierend einer externen elektronischen Vorrichtung, durch den ersten Fern-Intentionsauflöserdienst; und Übertragen (102, 204) der ersten impliziten Intention an einen zweiten Fern-Intentionsauflöserdienst in der externen elektronischen Vorrichtung durch den ersten Fern-Intentionsauflöserdienst, so dass der zweite Fern-Intentionsauflöserdienst in der externen elektronischen Vorrichtung endgeräteübergreifende Anwendungsprogramminformationen eines Antwortanwendungsprogramms zum Antworten auf die zweite implizite Intention in der externen elektronischen Vorrichtung erhält und retourniert; und
Empfangen (103, 205) der endgeräteübergreifenden Anwendungsprogramminformationen, retourniert von der externen elektronischen Vorrichtung, wobei die endgeräteübergreifenden Anwendungsprogramminformationen dem Anwendungsprogramm zwecks Aufruf zugeführt werden, wobei das Verfahren optional ferner Folgendes umfasst: Anzeigen der endgeräteübergreifenden Anwendungsprogramminformationen.

2. Verfahren zum Aufrufen des Anwendungsprogramms nach Anspruch 1, ferner umfassend, folgend auf das Erhalten (101) der ersten impliziten Intention, erzeugt durch das Anwendungsprogramm, in der elektronischen Vorrichtung:
Erhalten von lokalen Anwendungsprogramminformationen der elektronischen Vorrichtung zum Antworten auf die erste implizite Intention,
wobei das Verfahren, folgend auf das Empfangen der endgeräteübergreifenden
Anwendungsprogramminformationen, retourniert von der externen elektronischen Vorrichtung, Folgendes umfasst: Anzeigen der lokalen Anwendungsprogramminformationen und der endgeräteübergreifenden Anwendungsprogramminformationen.

3. Verfahren zum Aufrufen des Anwendungsprogramms nach Anspruch 2, wobei das Erhalten der lokalen Anwendungsprogramminformationen der elektronischen Vorrichtung zum Antworten auf die erste implizite Intention Folgendes umfasst:
Aufrufen einer standardmäßigen Anwendungsprogrammschnittstelle in einem Betriebssystem der elektronischen Vorrichtung; und
Erhalten der lokalen Anwendungsprogramminformationen, der ersten impliziten Intention korrespondierend, durch die standardmäßige Anwendungsprogrammschnittstelle.

4. Verfahren zum Aufrufen des Anwendungsprogramms nach Anspruch 1, wobei das Umwandeln (102) der ersten impliziten Intention in die zweite implizite Intention, korrespondierend der externen elektronischen Vorrichtung, Folgendes umfasst:
Durchführen von Serialisierungsverarbeitung auf der ersten impliziten Intention zum Umwandeln der ersten impliziten Intention in die zweite implizite Intention, korrespondierend der externen elektronischen Vorrichtung.

5. Verfahren zum Aufrufen des Anwendungsprogramms nach Anspruch 1, wobei das Empfangen (103) der endgeräteübergreifenden Anwendungsprogramminformationen, retourniert von der externen elektronischen Vorrichtung, Folgendes umfasst:
Empfangen (205), durch den ersten Fern-Intentionsauflöserdienst, der endgeräteübergreifenden Anwendungsprogramminformationen, retourniert durch den zweiten Fern-Intentionsauflöserdienst, auf der Grundlage der zweiten impliziten Intention.

6. Verfahren zum Aufrufen des Anwendungsprogramms nach Anspruch 1, ferner umfassend, folgend auf das Empfangen (103) der endgeräteübergreifenden Anwendungsprogramminformationen, retourniert von der externen elektronischen Vorrichtung, wobei die endgeräteübergreifenden Anwendungsprogramminformationen dem Anwendungsprogramm zwecks Aufruf zugeführt werden:
Bewirken, wenn ein durch das Anwendungsprogramm aufgerufenes Ziel-Anwendungsprogramm ein Anwendungsprogramm in den endgeräteübergreifenden Anwendungsprogramminformationen ist, dass das Ziel-Anwendungsprogramm auf der externen elektronischen Vorrichtung auf die erste implizite Intention antwortet.

7. Verfahren zum Aufrufen des Anwendungsprogramms nach Anspruch 1, ferner umfassend:
Umwandeln, wenn die erste implizite Intention eine erste vorbestimmte implizite Intention ist, der ersten vorbestimmten impliziten Intention in eine zweite vorbestimmte implizite Intention, korrespondierend der externen elektronischen Vorrichtung; und Übertragen der zweiten vorbestimmten impliziten Intention an die externe elektronische Vorrichtung, so dass die externe elektronische Vorrichtung vorbestimmte endgeräteübergreifende Anwendungsprogramminformationen, korrespondierend der zweiten vorbestimmten impliziten Intention, retourniert; und
Empfangen der vorbestimmten endgeräteübergreifenden Anwendungsprogramminformationen, wobei die vorbestimmten endgeräteübergreifenden Anwendungsprogramminformationen dem Anwendungsprogramm zwecks Aufruf zugeführt werden.

8. Verfahren zum Aufrufen eines Anwendungsprogramms, angewandt in einer elektronischen Vorrichtung, die ein Android-Betriebssystem verwendet, wobei das Verfahren Folgendes umfasst:
Empfangen (301), durch einen zweiten Fern-Intentionsauflöserdienst in der elektronischen Vorrichtung, einer zweiten impliziten Intention, übertragen durch einen ersten Fern-Intentionsauflöserdienst, in einer externen elektronischen Vorrichtung, wobei die zweite implizite Intention durch die externe elektronische Vorrichtung erhalten wird, indem eine erste implizite Intention durch den ersten Fern-Intentionsauflöserdienst in der externen elektronischen Vorrichtung umgewandelt wird; und wobei die erste implizite Intention durch ein Anwendungsprogramm in der externen elektronischen Vorrichtung erzeugt wird;
Erhalten (302), durch den zweiten Fern-Intentionsauflöserdienst in der externen elektronischen Vorrichtung, von endgeräteübergreifenden Anwendungsprogramminformationen eines Antwortanwendungsprogramms zum Antworten auf die zweite implizite Intention in der externen elektronischen Vorrichtung; und
Übertragen (303), durch den zweiten Fern-Intentionsauflöserdienst in der elektronischen Vorrichtung, der endgeräteübergreifenden Anwendungsprogramminformationen an die externe elektronische Vorrichtung, so dass die externe elektronische Vorrichtung die endgeräteübergreifenden Anwendungsprogramminformationen empfängt, wobei die endgeräteübergreifenden Anwendungsprogramminformationen dem Anwendungsprogramm zwecks Aufruf zugeführt werden.

9. Verfahren zum Aufrufen des Anwendungsprogramms nach Anspruch 8, wobei das Erhalten (302) der endgeräteübergreifenden Anwendungsprogramminformationen des Antwortanwendungsprogramms zum Antworten auf die zweite implizite Intention in der elektronischen Vorrichtung Folgendes umfasst:
Umwandeln der zweiten impliziten Intention in eine dritte implizite Intention, korrespondierend der elektronischen Vorrichtung, durch Entserialisierungsverarbeitung;
Aufrufen einer standardmäßigen Anwendungsprogrammschnittstelle in einem Betriebssystem der elektronischen Vorrichtung; und
Erhalten von endgeräteübergreifenden Anwendungsprogramminformationen, korrespondierend der dritten impliziten Intention, durch die standardmäßige Anwendungsprogrammschnittstelle.

10. Elektronische Vorrichtung (600), die ein Android-Betriebssystem verwendet, umfassend einen Prozessor (601) und einen Arbeitsspeicher (602), der darauf ein Computerprogramm gespeichert hat, wobei der Prozessor (601) ausgelegt ist, durch Aufrufen des Computerprogramms, zum:
Erhalten einer ersten impliziten Intention, erzeugt durch ein Anwendungsprogramm, in der elektronischen Vorrichtung;
Weiterleiten der ersten impliziten Intention an einen ersten Fern-Intentionsauflöserdienst in der elektronischen Vorrichtung, Umwandeln der ersten impliziten Intention in eine zweite implizite Intention, korrespondierend einer externen elektronischen Vorrichtung, durch den ersten Fern-Intentionsauflöserdienst; und Übertragen der ersten impliziten Intention an einen zweiten Fern-Intentionsauflöserdienst in der externen elektronischen Vorrichtung durch den ersten Fern-Intentionsauflöserdienst, so dass der zweite Fern-Intentionsauflöserdienst in der externen elektronischen Vorrichtung endgeräteübergreifende Anwendungsprogramminformationen eines Antwortanwendungsprogramms zum Antworten auf die zweite implizite Intention in der externen elektronischen Vorrichtung erhält und retourniert; und
Empfangen der endgeräteübergreifenden Anwendungsprogramminformationen, retourniert von der externen elektronischen Vorrichtung, wobei die endgeräteübergreifenden Anwendungsprogramminformationen dem Anwendungsprogramm zwecks Aufruf zugeführt werden,
wobei der Prozessor (601) optional ferner ausgelegt ist zum:
Anzeigen der endgeräteübergreifenden Anwendungsprogramminformationen.

11. Elektronische Vorrichtung (600) nach Anspruch 10, wobei der Prozessor (601) ferner ausgelegt ist zum:
Erhalten von lokalen Anwendungsprogramminformationen der elektronischen Vorrichtung zum Antworten auf die erste implizite Intention, und
Anzeigen der lokalen Anwendungsprogramminformationen und der endgeräteübergreifenden Anwendungsprogramminformationen.

12. Elektronische Vorrichtung (600) nach Anspruch 11, wobei der Prozessor (601) ferner ausgelegt ist zum:
Aufrufen einer standardmäßigen Anwendungsprogrammschnittstelle in einem Betriebssystem der elektronischen Vorrichtung; und
Erhalten der lokalen Anwendungsprogramminformationen, korrespondierend der ersten impliziten Intention, durch die standardmäßige Anwendungsprogrammschnittstelle.

13. Elektronische Vorrichtung (600) nach Anspruch 10, wobei der Prozessor (601) ferner ausgelegt ist zum:
Durchführen von Serialisierungsverarbeitung auf der ersten impliziten Intention zum Umwandeln der ersten impliziten Intention in die zweite implizite Intention, korrespondierend der externen elektronischen Vorrichtung.

14. Elektronische Vorrichtung (600), die ein Android-Betriebssystem verwendet, umfassend einen Prozessor (601) und einen Arbeitsspeicher (602), der darauf ein Computerprogramm gespeichert hat, wobei der Prozessor (601) ausgelegt ist, durch Aufrufen des Computerprogramms, zum:
Empfangen, durch einen zweiten Fern-Intentionsauflöserdienst in der elektronischen Vorrichtung, einer zweiten impliziten Intention, übertragen durch einen ersten Fern-Intentionsauflöserdienst in einer externen elektronischen Vorrichtung, wobei die zweite implizite Intention durch die externe elektronische Vorrichtung erhalten wird, indem eine erste implizite Intention durch den ersten Fern-Intentionsauflöserdienst in der externen elektronischen Vorrichtung umgewandelt wird; und wobei die erste implizite Intention durch ein Anwendungsprogramm in der externen elektronischen Vorrichtung erzeugt wird;
Erhalten, durch den zweiten Fern-Intentionsauflöserdienst in der externen elektronischen Vorrichtung, von endgeräteübergreifenden Anwendungsprogramminformationen eines Antwortanwendungsprogramms zum Antworten auf die zweite implizite Intention in der externen elektronischen Vorrichtung; und
Übertragen, durch den zweiten Fern-Intentionsauflöserdienst in der elektronischen Vorrichtung, der endgeräteübergreifenden Anwendungsprogramminformationen an die externe elektronische Vorrichtung, so dass die externe elektronische Vorrichtung die endgeräteübergreifenden Anwendungsprogramminformationen empfängt, wobei die endgeräteübergreifenden Anwendungsprogramminformationen dem Anwendungsprogramm zwecks Aufruf zugeführt werden.

## Revendications

1. Procédé pour invoquer un programme d'application, appliqué à un dispositif électronique utilisant un système d'exploitation Android, ce procédé comprenant :
l'obtention (101, 201) d'une première intention implicite générée par un programme d'application dans le dispositif électronique ;
le réacheminement (202) de cette première intention implicite à un premier service de résolution d'intention à distance dans le dispositif électronique, la conversion (102, 203) de cette première intention implicite en une deuxième intention implicite correspondant à un dispositif électronique externe par l'intermédiaire du premier service de résolution d'intention à distance, et la transmission (102, 204) de cette deuxième intention implicite à un deuxième service de résolution d'intention à distance dans le dispositif électronique externe par l'intermédiaire du premier service de résolution d'intention à distance, de façon à ce que le deuxième service de résolution d'intention à distance dans le dispositif électronique externe obtienne et renvoie des informations de programme d'application multi-terminaux d'un programme d'application de réponse pour répondre à la deuxième intention implicite dans le dispositif électronique externe ; et
la réception (103, 205) des informations de programme d'application multi-terminaux renvoyées par le dispositif électronique externe, les informations de programme d'application multi-terminaux étant fournies au programme d'application pour l'invocation,
ce procédé comprenant en outre, facultativement :
l'affichage des informations de programme d'application multi-terminaux.

2. Procédé pour invoquer le programme d'application selon la revendication 1, comprenant en outre, après l'obtention (101) de la première intention implicite générée par le programme d'application dans le dispositif électronique :
l'obtention d'informations de programme d'application locales du dispositif électronique pour répondre à la première intention implicite,
ce procédé comprenant en outre, après la réception des informations de programme d'application multi-terminaux renvoyées par le dispositif électronique externe :
l'affichage des informations de programme d'application locales et des informations de programme d'application multi-terminaux.

3. Procédé pour invoquer le programme d'application selon la revendication 2, dans lequel ladite obtention des informations de programme d'application locales du dispositif électronique pour répondre à la première intention implicite comprend :
l'invocation d'une interface de programme d'application standard dans un système d'exploitation du dispositif électronique ; et
l'obtention des informations de programme d'application locales correspondant à la première intention implicite par l'intermédiaire de l'interface de programme d'application standard.

4. Procédé pour invoquer le programme d'application selon la revendication 1, dans lequel ladite conversion (102) de la première intention implicite en la deuxième intention implicite correspondant au dispositif électronique externe comprend :
l'exécution d'un traitement de sérialisation sur la première intention implicite afin de convertir la première intention implicite en la deuxième intention implicite correspondant au dispositif électronique externe.

5. Procédé pour invoquer le programme d'application selon la revendication 1, dans lequel ladite réception (103) des informations de programme d'application multi-terminaux renvoyées par le dispositif électronique externe comprend :
la réception (205), par le premier service de résolution d'intention à distance, des informations de programme d'application multi-terminaux renvoyées par le deuxième service de résolution d'intention à distance en se basant sur la deuxième intention implicite.

6. Procédé pour invoquer le programme d'application selon la revendication 1, comprenant en outre, après la réception (103) des informations de programme d'application multi-terminaux renvoyées par le dispositif électronique externe, les informations de programme d'application multi-terminaux étant fournies au programme d'application pour l'invocation :
le fait d'entraîner, lorsqu'un programme d'application cible invoqué par le programme d'application est un programme d'application dans les informations de programme d'application multi-terminaux, la réponse à la première intention implicite par le programme d'application cible sur le dispositif électronique externe.

7. Procédé pour invoquer le programme d'application selon la revendication 1, comprenant en outre :
la conversion, lorsque la première intention implicite est une première intention implicite prédéterminée, de la première intention implicite prédéterminée en une deuxième intention implicite prédéterminée correspondant au dispositif électronique externe, et la transmission de la deuxième intention implicite prédéterminée au dispositif électronique externe, de façon à ce que le dispositif électronique externe renvoie des informations de programme d'application multi-terminaux correspondant à la deuxième intention implicite prédéterminée ; et
la réception des informations de programme d'application multi-terminaux prédéterminées, les informations de programme d'application multi-terminaux prédéterminées étant fournies au programme d'application pour l'invocation,

8. Procédé pour invoquer un programme d'application, appliqué à un dispositif électronique utilisant un système d'exploitation Android, ce procédé comprenant :
la réception (301), par l'intermédiaire d'un deuxième service de résolution d'intention à distance dans le dispositif électronique, d'une deuxième intention implicite transmise par un premier service de résolution d'intention à distance dans un dispositif électronique externe, cette deuxième intention implicite étant obtenue par le dispositif électronique externe en convertissant une première intention implicite par l'intermédiaire du premier service de résolution d'intention à distance dans le dispositif électronique externe, et cette première intention implicite étant générée par un programme d'application dans le dispositif électronique externe ;
l'obtention (302), par l'intermédiaire du deuxième service de résolution d'intention à distance dans le dispositif électronique, d'informations de programme d'application multi-terminaux d'un programme d'application de réponse pour répondre à la deuxième intention implicite dans le dispositif électronique ; et
la transmission (303), par l'intermédiaire du deuxième service de résolution d'intention à distance dans le dispositif électronique, des informations de programme d'application multi-terminaux au dispositif électronique externe, de façon à ce que le dispositif électronique externe reçoive les informations de programme d'application multi-terminaux, les informations de programme d'application multi-terminaux étant fournies au programme d'application pour l'invocation.

9. Procédé pour invoquer le programme d'application selon la revendication 8, dans lequel ladite obtention (302) des informations de programme d'application multi-terminaux du programme d'application de réponse pour répondre à la deuxième intention implicite dans le dispositif électronique comprend :
la conversion de la deuxième intention implicite en une troisième intention implicite correspondant au dispositif électronique par l'intermédiaire d'un traitement de désérialisation ;
l'invocation d'une interface de programme d'application standard dans un système d'exploitation du dispositif électronique ; et
l'obtention d'informations de programme d'application multi-terminaux correspondant à la troisième intention implicite par l'intermédiaire de l'interface de programme d'application standard.

10. Dispositif électronique (600) utilisant un système d'exploitation Android, comprenant un processeur (601) et une mémoire (602) sur laquelle est stocké un programme informatique, le processeur (601) étant configuré de façon à, en invoquant le programme informatique :
obtenir une première intention implicite générée par un programme d'application dans le dispositif électronique ;
réacheminer cette première intention implicite à un premier service de résolution d'intention à distance dans le dispositif électronique, convertir cette première intention implicite en une deuxième intention implicite correspondant à un dispositif électronique externe par l'intermédiaire du premier service de résolution d'intention à distance, et transmettre cette deuxième intention implicite à un deuxième service de résolution d'intention à distance dans le dispositif électronique externe par l'intermédiaire du premier service de résolution d'intention à distance, de façon à ce que le deuxième service de résolution d'intention à distance dans le dispositif électronique externe obtienne et renvoie des informations de programme d'application multi-terminaux d'un programme d'application de réponse pour répondre à la deuxième intention implicite dans le dispositif électronique externe ; et de façon à
recevoir les informations de programme d'application multi-terminaux renvoyées par le dispositif électronique externe, les informations de programme d'application multi-terminaux étant fournies au programme d'application pour l'invocation,
le processeur (601) étant facultativement configuré de façon à :
afficher les informations de programme d'application multi-terminaux.

11. Dispositif électronique (600) selon la revendication 10, dans lequel le processeur (601) est configuré en outre de façon à :
obtenir des informations de programme d'application locales du dispositif électronique pour répondre à la première intention implicite ; et à
afficher les informations de programme d'application locales et les informations de programme d'application multi-terminaux.

12. Dispositif électronique (600) selon la revendication 11, dans lequel le processeur (601) est configuré en outre de façon à :
invoquer une interface de programme d'application standard dans un système d'exploitation du dispositif électronique ; et à
obtenir les informations de programme d'application locales correspondant à la première intention implicite par l'intermédiaire de l'interface de programme d'application standard.

13. Dispositif électronique (600) selon la revendication 10, dans lequel le processeur (601) est configuré en outre de façon à :
exécuter un traitement de sérialisation sur la première intention implicite afin de convertir la première intention implicite en la deuxième intention implicite correspondant au dispositif électronique externe.

14. Dispositif électronique (600) utilisant un système d'exploitation Android, comprenant un processeur (601) et une mémoire (602) sur laquelle est stocké un programme informatique, le processeur (601) étant configuré de façon à, en invoquant le programme informatique :
recevoir, par l'intermédiaire d'un deuxième service de résolution d'intention à distance dans le dispositif électronique, une deuxième intention implicite transmise par un premier service de résolution d'intention à distance dans un dispositif électronique externe, cette deuxième intention implicite étant obtenue par le dispositif électronique externe en convertissant une première intention implicite par l'intermédiaire du premier service de résolution d'intention à distance dans le dispositif électronique externe, et cette première intention implicite étant générée par un programme d'application dans le dispositif électronique externe ;
obtenir, par l'intermédiaire du deuxième service de résolution d'intention à distance dans le dispositif électronique, des informations de programme d'application multi-terminaux d'un programme d'application de réponse pour répondre à la deuxième intention implicite dans le dispositif électronique ; et
de façon à
transmettre, par l'intermédiaire du deuxième service de résolution d'intention à distance dans le dispositif électronique, les informations de programme d'application multi-terminaux au dispositif électronique externe, de façon à ce que le dispositif électronique externe reçoive les informations de programme d'application multi-terminaux, les informations de programme d'application multi-terminaux étant fournies au programme d'application pour l'invocation.
